# EUROPEAN PATENT APPLICATION

(11) **EP 1 113 427 A2**
(43) Date of publication of application: **04.07.2001**
(21) Application number: 00311013.7
(22) Date of filing: 11.12.2000
(51) Int. Cl.: G11B 7/12, G11B 25/04

(54) **Mounting structure of hybrid optical module, and an optical recording medium drive apparatus in which the module is mounted**

(30) Priority: 28.12.1999 JP 37516899
(71) Applicant: Pioneer Corporation, Meguro-ku, Tokyo (JP)
(72) Inventor: Okayasu, Masaki, C/o Pioneer Corporation, Tsurugashima-shi, Saitama (JP); Fukuda, Shinnosuke, c/o Pioneer Corporation, Tsurugashima-shi, Saitama (JP); Tanaka, Hirofumi, c/o Pioneer Corporation, Tsurugashima-shi, Saitama (JP)
(74) Representative: Haley, Stephen

(57) **Abstract**

A corner portion of a hybrid optical module 4 which is closer to one of shafts or a shaft 2 when the hybrid optical module is mounted on a support member 6 is cut out in substantially parallel with the shaft 2, and by an angle which is substantially equal to an incident angle of an optical path concerning a tracking direction of an optical disk 7. A spindle motor is placed to be closer to one of the two shafts in the direction of light incidence of an optical system including the hybrid optical module. The hybrid optical module having a cut corner portion which is closer to another one of the two shafts is mounted with a pickup unit 6. The angle of the cut-out is adequately set to be in a range of 30° to 45° substantially.

## Description

The present invention relates to a mounting structure of a hybrid optical module which can cope with a wide variety of pickup structures, and also to a recording medium drive apparatus in which such a module is mounted.

Unlike in a conventional optical module of the discrete type, in a hybrid optical module, main components of an optical system other than an objective lens are integrated into one component, so as to extremely reduce the size of the module. Specifically, a photo diode IC on which a photo detector is formed is used as a substrate, and a prism, a photo diode, a laser diode, and the like are mounted on the substrate, thereby configuring an optical module. These parts are housed in a package. An optical lens and an actuator are placed on the package to complete an optical pickup unit.

For optical disk drive apparatuses, there are a wide variety of mechanisms, such as a drive apparatus which is sold singly, that which is to be mounted in a notebook-type personal computer, and that which is to be mounted in a vehicle. Depending on the use, drive apparatuses are requested to meet different specifications. As miniaturization of each part advances, a larger number of restrictions are imposed on mounting of a pickup mechanism including such a hybrid optical module.

From the viewpoint of mounting of a pickup mechanism, optical disk drive apparatuses are roughly classified into two categories, i.e., those in which the spindle motor is closer to a right shaft in the incidence direction of the optical system, and those in which the spindle motor is closer to a left shaft. Of course, also restrictions from other viewpoints such as a reduced thickness are imposed.

The invention relates to various structures of pickups which are to be mounted in such optical disk drive apparatuses. Particularly, it is an object of the invention to provide a mounting structure of a hybrid optical module which enables a hybrid optical module of one kind to cope with a wide variety of pickup structures in which the mounting position is determined in the incidence direction of the optical system, and also a recording medium drive apparatus in which such a module is mounted.

In order to solve the problems discussed above, the mounting structure of a hybrid optical module according to a first aspect of the invention is a mounting structure of a hybrid optical module in a recording medium drive apparatus in which a polygonal hybrid optical module having a light emitting and receiving device is mounted on a movable member that is supported by at least two shafts, and the hybrid optical module is slid on the shafts attached to the movable member, thereby performing a tracking operation on a recording medium, and is configured so that a portion of the hybrid optical module which is closer to one of the shafts when the hybrid optical module is mounted on the movable member is cut out in substantially parallel with the shaft, and by an angle which is substantially equal to an incident angle of an optical path with respect to a tracking direction of the recording medium.

The mounting structure of a hybrid optical module according to a second aspect of the invention is configured so that, in the structure of the first aspect of the invention, a spindle motor is placed to be closer to one of the two shafts in a direction of light incidence of an optical system including the hybrid optical module, and the hybrid optical module is mounted with cutting out a portion which is closer to another one of the at least two shafts.

The mounting structure of a hybrid optical module according to a third aspect of the invention is configured so that, in the structure of the first aspect of the invention, the angle by which the portion of the hybrid optical module is cut out is in a range of 30° to 45°.

The recording medium drive apparatus according to a fourth aspect of the invention is a recording medium drive apparatus in which a hybrid optical module having a light emitting and receiving device is mounted on a movable member that is supported by at least two shafts, and the hybrid optical module is slid on the shafts by supplying a current to a driving coil attached to the movable member, thereby performing a tracking operation on a recording medium, and is configured so that a portion of the hybrid optical module which is closer to one of the shafts is cut out in substantially parallel with the shafts, and by an angle which is substantially equal to an incident angle of an optical path concerning a tracking direction of the recording medium.

According to this configuration, a portion of the hybrid optical module is cut out by an angle which is formed by the track direction of the optical disk and the incident light from the hybrid optical module. Therefore, it is possible to provide a hybrid optical module in which interference with the shaft can be prevented from occurring, and an unnecessary space can be reduced, and which can be efficiently mounted to a wide variety of optical pickup structures that are prepared in the incidence direction of the optical system, and also a recording medium drive apparatus in which such a module is mounted.

### In the Drawings

Fig. 1 is a view showing an embodiment of the mounting structure of a hybrid optical module according to the invention, and an optical recording medium drive apparatus in which the module is mounted.

Fig. 2 is a view showing another embodiment of the mounting structure of a hybrid optical module according to the invention, and a recording medium drive apparatus in which the module is mounted.

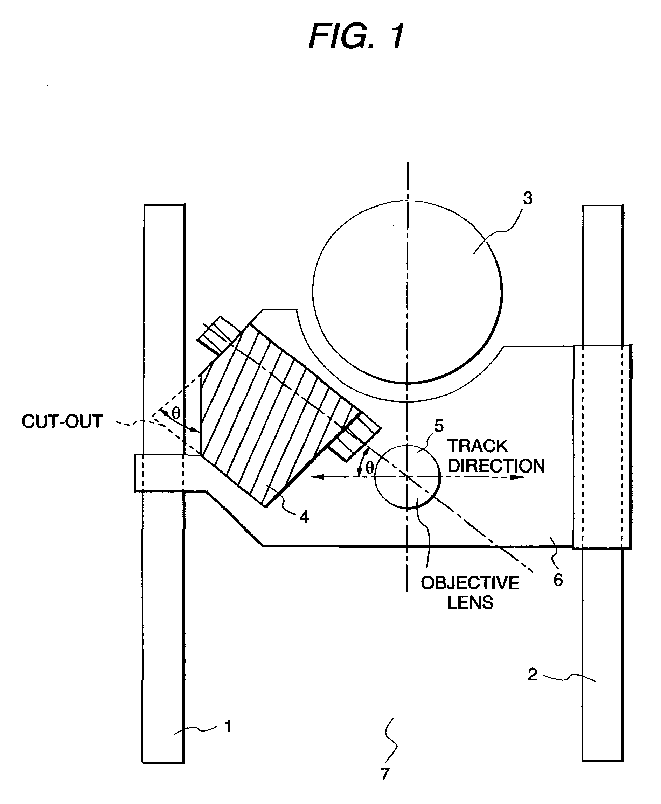

Fig. 1 is a view showing an embodiment of the mounting structure of a hybrid optical module according to the invention. The embodiment is a disk drive apparatus which is used in a notebook-type personal computer or that for vehicle mounting, and in which a spindle motor 3 is closer to one of left and right shafts 1 and 2, i.e., the right shaft 2.

As illustrated, a hybrid optical module 4 is mounted with a support member 6 (an optical pickup including the mounted hybrid optical module). The support member 6 is driven by a driving motor which is not shown, to be slid on the two shafts 1 and 2, thereby performing a tracking operation on an optical disk 7. When an incorporated light emitting and receiving device emits and receives light via an objective lens 5, the hybrid optical module 4 which is mounted with the support member 6 is clamped by a clamper (not shown) and then reads out recorded data of the optical disk that is rotated via the spindle motor 3.

As illustrated, the hybrid optical module 4 has a pentagonal shape in which the left corner is cut out. This cut-out is formed in order to prevent interference between the module and the shaft 1 from occurring. The angle θ required for the cut-out is nearly equal to an angle of the optical path concerning the tracking direction of the optical disk, or similar to the angle. According to experiments, it is appropriate to set the angle to be in a range of about 30° to 45°.

As described above, the corner portion of the hybrid optical module 4 which is closer to the left shaft 1 is cut out in substantially parallel with the left shaft 1, and then mounted with the support member 6. Therefore, interference with the left shaft 1 can be prevented from occurring, and a waste space can be reduced, so that the module contributes to further miniaturization of the mechanism.
[0014]

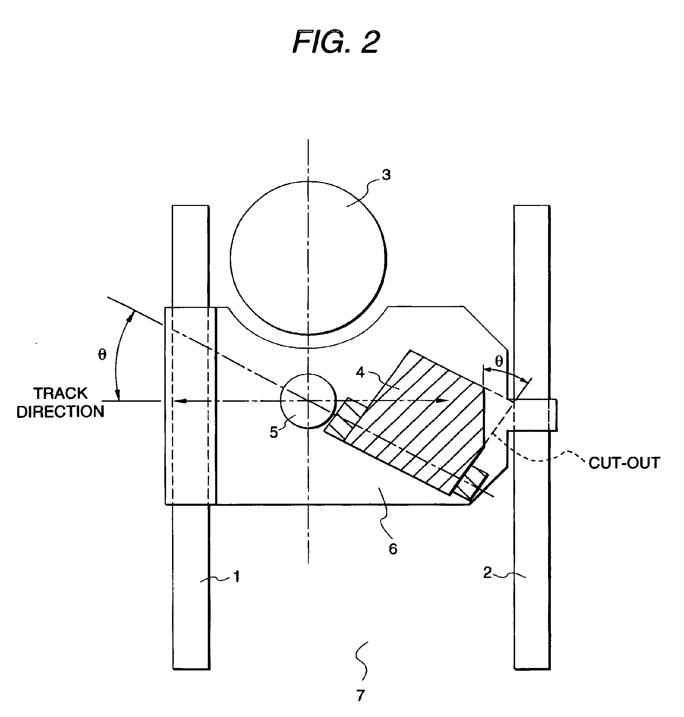

Fig. 2 is a view showing another embodiment of the mounting structure of a hybrid optical module according to the invention. The embodiment is an optical disk drive apparatus in which a spindle motor 3 is closer to one of left and right shafts 1 and 2, i.e., the left shaft 1. In the same manner as Fig. 1, the corner portion of the hybrid optical module 4 which is closer to the right shaft 2 is cut out in parallel with the shaft 2, by the angle θ which is equal to an angle formed by the tracking direction of the optical disk 7 and the incident light from the hybrid optical module 4, or similar to the angle. According to this configuration, interference between the right shaft 2 and the hybrid optical module 4 can be prevented from occurring, and a waste space can be reduced.

As described above, according to the invention, a portion of a hybrid optical module is cut out by an angle which is formed by the track direction of an optical disk and the incident light from the hybrid optical module. Therefore, it is possible to provide a hybrid optical module in which interference between the module and a shaft can be prevented from occurring, and which can be efficiently mounted to any one of a wide variety of optical pickup structures that are prepared in the incidence direction of an optical system, and also an optical recording medium drive apparatus in which such a module is mounted.

Furthermore, the cut-out of a portion of the hybrid optical module can reduce a waste space. This contributes to miniaturization of parts themselves, and also to further thinning and miniaturization of an optical recording medium drive apparatus.

## Claims

1. A mounting structure of a hybrid optical module comprising:
a movable member that is supported by at least two shafts,
a recording medium drive apparatus including a hybrid optical module having a light emitting and receiving device mounted on said movable member, and
a driving coil attached to said movable member,
said hybrid optical module being slid on said shafts so as to perform a tracking operation on an optical recording medium, wherein
a portion of said hybrid optical module which is closer to one of said shafts when said hybrid optical module is mounted on said movable member is cut out in substantially parallel with said shaft, and by an angle which is substantially equal to an incident angle of an optical path with respect to a tracking direction of the optical recording medium.

2. The mounting structure of said hybrid optical module according to claim 1, wherein
a spindle motor is placed to be closer to one of said shafts in a direction of light incidence of an optical system including said hybrid optical module, and
said hybrid optical module having a cut portion which is closer to another one of said at least two shafts is mounted with a pick-up unit.

3. The mounting structure of said hybrid optical module according to claim 1, wherein
the angle by which said portion of said hybrid optical module is cut out is in a range of 30° to 45° substantially.

4. A recording medium drive apparatus comprising:
a movable member that is supported by at least two shafts, and
a polygonal hybrid optical module having a light emitting and receiving device which is mounted on said movable member, and
a driving coil attached to said movable member,
said hybrid optical module being slid on said shafts so as to perform a tracking operation on a recording medium, wherein
a portion of said hybrid optical module which is closer to one of said shafts is cut out in substantially parallel with said shafts, and by an angle which is substantially equal to an incident angle of an optical path in a tracking direction of the recording medium.
